# EUROPEAN PATENT SPECIFICATION

(11) **EP 4 158 556 B1**
(45) Date of publication and mention of the grant of the patent: **29.10.2025**
(21) Application number: 21818811.8
(22) Date of filing: 21.05.2021
(51) Int. Cl.: G06N 3/098, G06N 3/09, G06N 20/00, G06N 5/02

(54) **COLLABORATIVE MACHINE LEARNING**
KOLLABORATIVES MASCHINENLERNEN
APPRENTISSAGE AUTOMATIQUE COLLABORATIF

(30) Priority: 02.06.2020 GB 202008234
(43) Date of publication of application: 05.04.2023
(73) Proprietor: Nokia Technologies Oy, 02610 Espoo (FI)
(72) Inventor: MATHUR, Akhil, London N17 9GE (GB)
(74) Representative: Venner Shipley LLP
(86) International application number: PCT/FI2021/050369
(87) International publication number: WO 2021/245327

(56) References cited:
- US-A1- 2019 220 703
- FELIX SATTLER ET AL: "Clustered Federated Learning: Model-Agnostic Distributed Multi-Task Optimization under Privacy Constraints", ARXIV.ORG, CORNELL UNIVERSITY LIBRARY, 201 OLIN LIBRARY CORNELL UNIVERSITY ITHACA, NY 14853, 4 October 2019 (2019-10-04), XP081510830
- CHRISTOPHER BRIGGS ET AL: "Federated learning with hierarchical clustering of local updates to improve training on non-IID data", ARXIV.ORG, CORNELL UNIVERSITY LIBRARY, 201 OLIN LIBRARY CORNELL UNIVERSITY ITHACA, NY 14853, 24 April 2020 (2020-04-24), XP081659326
- TAKAYUKI NISHIO ET AL: "Client Selection for Federated Learning with Heterogeneous Resources in Mobile Edge", ARXIV.ORG, CORNELL UNIVERSITY LIBRARY, 201 OLIN LIBRARY CORNELL UNIVERSITY ITHACA, NY 14853, 23 April 2018 (2018-04-23), XP081143755
- TAKAYUKI NISHIO; RYO YONETANI: "Client Selection for Federated Learning with Heterogeneous Resources in Mobile Edge", ARXIV.ORG, 23 April 2018 (2018-04-23), 201 Olin Library Cornell University Ithaca, NY 14853 , XP081143755
- LUMIN LIU; JUN ZHANG; S. H. SONG; KHALED B. LETAIEF: "Client-Edge-Cloud Hierarchical Federated Learning", ARXIV.ORG, 16 May 2019 (2019-05-16), 201 Olin Library Cornell University Ithaca, NY 14853 , XP081520304
- DAVID ALVAREZ-MELIS; NICOL\`O FUSI: "Geometric Dataset Distances via Optimal Transport", ARXIV.ORG, 7 February 2020 (2020-02-07), 201 Olin Library Cornell University Ithaca, NY 14853 , XP081594118

## Description

### Field

Example aspects relate to the field of collaborative machine learning. Example aspects relate to an apparatus and also associated methods, systems and computer programs.

### Background

Machine learning (ML) is an increasingly important technique having various real-world applications. One of the aims of ML is to learn a computational model based on training data, for example to enable predictions to be generated using new data subsequently input to the ML model during an inference phase.

Collaborate machine learning (CML) is an emerging technique that involves distributed computing devices, for example edge devices. These computing devices collaborate by performing computations on their own associated datasets, producing a local model and then sharing data, e.g. parameters/weights of their local model to a centralized computer which updates a combined model. The combined model, for example, may update by using an average of the parameters provided by the multiple computing devices. The combined model may then be provided back to the computing devices for another round of local updating, and so on, in multiple rounds of updating. CML is sometimes referred to as federated learning (FL).

FELIX SATTLER ET AL: "Clustered Federated Learning: Model-Agnostic Distributed Multi-Task Optimization under Privacy Constraints", ARXIV.ORG, CORNELL UNIVERSITY LIBRARY, 201 OLIN LIBRARY CORNELL UNIVERSITY ITHACA, NY 14853, 4 October 2019 (2019-10-04), discloses methods of clustering clients in the federated learning process to generate a model for each cluster of clients.

### Summary

The scope of protection sought for various aspects of the invention is set out by the independent claims. The aspects and features, if any, described in this specification that do not fall under the scope of the independent claims are to be interpreted as examples useful for understanding the various aspects of the invention.

According to a first aspect, this specification describes an apparatus, comprising means for performing: determining one or more properties associated with one or more processing nodes, the one or more processing nodes configured to utilize respective data based on a local dataset of one or more particular processing nodes for updating a collaboratively learned model; and determining, based on the one or more properties, one or more of the particular processing nodes for use in updating the learned model.

The one or more properties associated with the one or more particular processing node are based on one or more properties of its local dataset. The means are further configured for determining a similarity between dataset properties of a particular first processing node and corresponding dataset properties of one or more known processing nodes already used to update the collaboratively learned model; and determining that the first processing node is to be used for updating the collaboratively learned model with the known processing nodes only if the determined similarity is within a predetermined threshold.

The means may be further configured for accessing a data representation, associating one or more sub-models associated with the learned model with a respective set of one or more known processing nodes already used to update a particular one of said sub-models, wherein the means may be further configured for, responsive to identifying that the particular first processing node is not currently used to update any one of the sub-models, identifying a known processing node of the representation having the most similar dataset properties to that of the first processing node, and determining that the first processing node is subsequently to be used for updating the particular sub-model updated by said most-similar known processing node.

The determined sub-model may subsequently be updated using data from the first processing node and all other known processing nodes already used to update the sub-model, and the data representation updated to include the first processing node.

The data representation may comprise a hierarchical representation of the known processing nodes, including a root node associated with the learned model and one or more descending levels including one or more leaf nodes associated with a respective sub-model, the one or more leaf nodes being linked to a higher-level node having the most similar dataset properties, wherein identifying the known processing node of the representation having the most similar dataset properties may be performed only with respect to a set of candidate nodes comprising the root node and the one or more leaf nodes. The sub-model may be subsequently updated using data from the first processing node, and other known processing nodes from which it descends in the hierarchical representation from the root node.

The data representation may be stored at a centralized collaborative server for access by the one or more processing nodes.

The data representation may be stored at one or more of the processing nodes and transmitted to other ones of the one or more processing nodes

The means may be further configured for sending the data representation to the one or more processing nodes, either in response to a request or in response to an update.

The similarity may be determined based on a statistical distribution of data in the local datasets.

The statistical distribution may be determined using features extracted from each local dataset providing an intermediate representation of said local dataset.

The similarity may be determined by computing a mathematical distance metric between the statistical distribution of the first processing node and that of the one or more known processing nodes, and selecting that which has the lowest distance.

The distance metric may comprise the Wasserstein Distance metric. The distance metric may comprise the Maximum Mean Discrepancy (MMD) metric.

The means may be further configured for performing said determination, responsive to a request received from the first processing node, the request including the one or more properties of its local dataset.

The apparatus may further comprise means for: identifying a data amount required to be received at a server or apparatus, from the one or more processing nodes, to perform an updating round for the collaboratively learned model; determining one or more properties indicative of the one or more processing node's ability to transmit the required data amount to the server; and determining, based on the determined one or more properties, a subset of the one or more processing nodes which are able to transmit the required data amount for updating the learned model in the updating round.

The means may be further configured for determining the required data amount based on a request received from the server or apparatus.

The request received from the server or apparatus may comprise an indication of a size M of collaboratively learned model and a number C of processing nodes required to perform the updating round.

The determined one or more properties may comprise an available bandwidth of at least part of a wireless communication network over which the one or more processing nodes transmit their respective data to the server. The available bandwidth may be determined for a cell of the wireless network with which one or more processing nodes is or are currently connected. The available bandwidth may be determined by the cell, responsive to receiving identification from a network operator of one or more processing nodes connected to the cell that have opted-in to transmit data for the collaboratively learned model. The cell may be further configured to provide, to the wireless network, identification of processing nodes connected to the cell, that it determines are eligible to transmit their respective data to the server.

If the current available bandwidth for the cell is less than that needed by all identified processing nodes of the cell, the means may be further configured for providing to the network operator: identification of either zero processing nodes of the cell; or a subset of the identified processing nodes of the cell, based on the current available bandwidth.

If the current available bandwidth for the cell is greater than that needed by all the identified processing nodes for the cell, or a subset of eligible processing nodes thereof, the means may be further configured for determining one or more node-specific resources currently associated with each such processing node, and to filter-out processing nodes where one or more of said node-specific resources do not meet a predetermined threshold or condition.

The node-specific resource may include current available data on a data plan for the processing node.

The node-specific resources may include remaining battery life for the processing node.

The cell may be a wireless communication network cell.

According to a second aspect, this specification describes a computer-implemented method, comprising:
determining one or more properties associated with one or more processing nodes, the one or more processing nodes configured to utilize respective data based on a local dataset of one or more particular processing nodes for updating a collaboratively learned model;
and determining, based on the one or more properties, one or more of the particular processing nodes for use in updating the learned model.

The one or more properties are associated with the one or more particular processing node are based on one or more properties of its local dataset.

The method further comprises:
determining a similarity between dataset properties of a particular first processing node and corresponding dataset properties of one or more known processing nodes already used to update the collaboratively learned model; and
determining that the first processing node is to be used for updating the collaboratively learned model with the known processing nodes only if the determined similarity is within a predetermined threshold.

The method may further comprise accessing a data representation, associating one or more sub-models associated with the learned model with a respective set of one or more known processing nodes already used to update a particular one of said sub-models, and responsive to identifying that the particular first processing node is not currently used to update any one of the sub-models, identifying a known processing node of the representation having the most similar dataset properties to that of the first processing node, and determining that the first processing node is subsequently to be used for updating the particular sub-model updated by said most-similar known processing node.

The determined sub-model may subsequently be updated using data from the first processing node and all other known processing nodes already used to update the sub-model, and the data representation updated to include the first processing node.

The data representation may comprise a hierarchical representation of the known processing nodes, including a root node associated with the learned model and one or more descending levels including one or more leaf nodes associated with a respective sub-model, the one or more leaf nodes being linked to a higher-level node having the most similar dataset properties, wherein identifying the known processing node of the representation having the most similar dataset properties may be performed only with respect to a set of candidate nodes comprising the root node and the one or more leaf nodes.

The sub-model may be subsequently updated using data from the first processing node, and other known processing nodes from which it descends in the hierarchical representation from the root node.

The data representation may be stored at a centralized collaborative server for access by the one or more processing nodes.

The data representation may be stored at one or more of the processing nodes and transmitted to other ones of the one or more processing nodes.

The method may further comprise sending the data representation to the one or more processing nodes, either in response to a request or in response to an update.

The similarity may be determined based on a statistical distribution of data in the local datasets.

The statistical distribution may be determined using features extracted from each local dataset providing an intermediate representation of said local dataset.

The similarity may be determined by computing a mathematical distance metric between the statistical distribution of the first processing node and that of the one or more known processing nodes, and selecting that which has the lowest distance.

The distance metric may comprise the Wasserstein Distance metric. The distance metric may comprise the Maximum Mean Discrepancy (MMD) metric.

The method may further comprise performing said determination, responsive to a request received from the first processing node, the request including the one or more properties of its local dataset.

The method may further comprise: identifying a data amount required to be received at a server or apparatus, from the one or more processing nodes, to perform an updating round for the collaboratively learned model; determining one or more properties indicative of the one or more processing node's ability to transmit the required data amount to the server; and determining, based on the determined one or more properties, a subset of the one or more processing nodes which are able to transmit the required data amount for updating the learned model in the updating round.

The method may further comprise determining the required data amount based on a request received from the server or apparatus.

The request received from the server or apparatus may comprise an indication of a size M of collaboratively learned model and a number C of processing nodes required to perform the updating round.

The determined one or more properties may comprise an available bandwidth of at least part of a wireless communication network over which the one or more processing nodes transmit their respective data to the server or apparatus.

The available bandwidth may be determined for a cell of the wireless network with which one or more processing nodes is or are currently connected.

The available bandwidth may be determined by the cell, responsive to receiving identification from a network operator of one or more processing nodes connected to the cell that have opted-in to transmit data for the collaboratively learned model.

The cell may provide, to the wireless network, identification of processing nodes connected to the cell, that it determines are eligible to transmit their respective data to the server or apparatus.

If the available bandwidth for the cell is less than that needed by all identified processing nodes of the cell, the method may further comprise, providing to the network operator: identification of either zero processing nodes of the cell; or a subset of the identified processing nodes of the cell, based on the available bandwidth.

If the available bandwidth for the cell is greater than that needed by all the identified processing nodes for the cell, or a subset of eligible processing nodes thereof, the method may further comprise determining one or more node-specific resources currently associated with each such processing node, and filtering-out processing nodes where one or more of said node-specific resources do not meet a predetermined threshold or condition.

The node-specific resource may include current available data on a data plan for the processing node.

The node-specific resources may include remaining battery life for the processing node.

The cell may be a wireless communication network cell.

According to a third aspect, this specification describes a computer-readable medium comprising program instructions stored thereon which, when executed by a computer, cause the computer to perform the method of:
determining one or more properties associated with one or more processing nodes, the one or more processing nodes configured to utilize respective data based on a local dataset of one or more particular processing nodes for updating a collaboratively learned model;
and determining, based on the one or more properties, one or more of the particular processing nodes for use in updating the learned model.

According to a fourth aspect, this specification describes an apparatus comprising: at least one processor; and at least one memory including computer program code which, when executed by the at least one processor, causes the apparatus to: determine one or more properties associated with one or more processing nodes, the one or more processing nodes configured to utilize respective data based on a local dataset of one or more particular processing nodes for updating a collaboratively learned model; and determine, based on the one or more properties, one or more of the particular processing nodes for use in updating the learned model.

According to a fifth aspect, this specification describes an apparatus, comprising means for: determining one or more properties associated with a local dataset utilized by one or more particular processing nodes; determining a similarity between the dataset properties of a particular first processing node and corresponding dataset properties of one or more known processing nodes already used to update a collaboratively learned model; accessing a data representation, associating one or more sub-models associated with the learned model with a respective set of one or more known processing nodes already used to update a particular one of said sub-models, wherein the means is further configured for, responsive to identifying that the particular first processing node is not currently used to update any one of the sub-models, identifying a known processing node of the representation having the most similar dataset properties to that of the first processing node, and determining that the first processing node is subsequently to be used for updating the particular sub-model updated by said most-similar known processing node.

According to a sixth aspect, this specification describes a method, comprising: determining one or more properties associated with a local dataset utilized by one or more particular processing nodes; determining a similarity between the dataset properties of a particular first processing node and corresponding dataset properties of one or more known processing nodes already used to update a collaboratively learned model; accessing a data representation, associating one or more sub-models associated with the learned model with a respective set of one or more known processing nodes already used to update a particular one of said sub-models, responsive to identifying that the particular first processing node is not currently used to update any one of the sub-models, identifying a known processing node of the representation having the most similar dataset properties to that of the first processing node, and determining that the first processing node is subsequently to be used for updating the particular sub-model updated by said most-similar known processing node.

According to a seventh aspect, this specification describes an apparatus, comprising means for: identifying a data amount required to be received at a server or apparatus, from one or more processing nodes, to perform an updating round for a collaboratively learned model; determining one or more properties indicative of the one or more processing node's ability to transmit the required data amount to the server; and determining, based on the determined one or more properties, a subset of the one or more processing nodes which are able to transmit the required data amount for updating the learned model in the updating round.

According to an eighth aspect, this specification describes a method, comprising: identifying a data amount required to be received at a server or apparatus, from one or more processing nodes, to perform an updating round for a collaboratively learned model; determining one or more properties indicative of the one or more processing node's ability to transmit the required data amount to the server; and determining, based on the determined one or more properties, a subset of the one or more processing nodes which are able to transmit the required data amount for updating the learned model in the updating round.

### Brief Description of the Figures

Examples will now be described, by way of example only, with reference to the accompanying drawings.
FIG 1 is a schematic view of a system for collaborative machine learning for understanding example aspects;
FIGs. 2a - 2b are schematic views of how collaborative learning may be performed at a functional level;
FIG. 3 is a flow diagram indicating processing operations that may be performed according to example aspects;
FIG. 4 is a flow diagram indicating processing operations that may be performed according to particular example aspects;
FIG. 5 is a flow diagram indicating processing operations that may be performed according to particular example aspects;
FIG. 6 is a schematic view of a data representation that may be provided and/or updated according to particular example aspects;
FIG. 7 is a flow diagram indicating processing operations that may be performed according to particular example aspects;
FIG. 8 is a flow diagram indicating processing operations that may be performed according to other particular example aspects;
FIG. 9 is a flow diagram indicating processing operations that may be performed according to other particular example aspects;
FIG. 10 is a flow diagram indicating processing operations that may be performed according to other particular example aspects;
FIG. 11 is a schematic view of a system for collaborative machine learning according to particular example aspects;
FIG. 12 is a schematic view of functional components of an apparatus for performance of one or more example aspects; and
FIG. 13 is a plan view of a non-transitory medium for storing machine-readable instructions for performance of one or more example aspects.

### Detailed Description

Example aspects relate to the field of collaborative machine learning (CML) which is sometimes referred to as federated learning (FL). Example aspects relate to an apparatus and also associated methods and computer programs.

Modern computing devices, for example mobile phones, tablet computers, wearables and digital assistants are relatively commonplace. Such computing devices may also receive data from various sources, including from on-board sensors such as microphones, cameras and health-related sensors. Such computing devices are used relatively frequently and hence generate significant amounts data useful for training prediction models, for example for speech and image recognition models, to give but two examples.

CML is an emerging technique that involves distributed computing devices, for example edge devices. These computing devices collaborate by performing computations on their own associated datasets, producing a local model and sharing data to a centralized computer which updates a combined model. The combined model, for example, may update by using an average of the parameters provided by the multiple computing devices. The combined model may then be provided back to the distributed computing devices for another round of local updating, and so on, in multiple rounds or iterations. By sharing parameters, or at least intermediate feature extractions, rather than local datasets, data security and/or privacy can be maintained.

CML is sometimes referred to as federated learning (FL).

Generally speaking, ML models perform better given more training data. Hence, CML is a useful technique for improving local learned models based on collaborative training of a collaborative model. In this way, a local computing device need not comprise the storage and/or processing capacity to process potentially huge datasets but can receive updated parameters from the client or processing node handling the CML for refining their local model.

Example aspects are described herein relating to improved techniques for CML.

Example aspects may include methods, computer programs and/or apparatuses for determining one or more properties associated with one or more processing nodes, the one or more processing nodes configured to utilize respective data based on a local dataset for updating a collaboratively learned model. The example aspects may involve determining, based on the one or more properties, one or more of the particular processing nodes for use in updating the learned model. The one or more particular processing nodes may change in different rounds of updating, i.e. over time. In some example aspects, the learned model may be associated with one or more sub-models, which may be considered specialized versions of the initial learned model.

The processing node may comprise any computer device or client system comprising one or more processors and one or more memory devices with one or more program code. For example, the processing node may comprise a personal computer (PC), laptop, a mobile phone, mobile communication device, navigation device, media player, audio head-set, augmented reality (AR) and/or virtual reality (VR) head-set, tablet computer, wearable device, smart watch, digital assistant, IoT (Internet of Things) device, sensor device, camera device, server device, router, access point, household appliance device, vehicle, drone, etc. or any number of combinations thereof. A processing node may be associated with a ML client, model and/or software.

A processing node may collect one or more local datasets via any known means, e.g. via user interactions with a keypad or touch screen, via internal processes such as memory consumption, central processing unit (CPU) consumption, power consumption, battery charge level, via one or more sensors such as a location sensor, an inertial measurement unit (IMU), a microphone or a camera and/or health-related sensors such as pulse monitor, blood pressure monitor, blood oxygen monitor, calorie counter, motion sensor, etc. or any combination thereof. Data for the local datasets may be received from another device associated with the processing node, e.g. a server, a memory unit, a sensor device, an IoT device, a wearable smart watch or blood pressure monitor. The processing nodes may use any known ML or AI (Artificial Intelligence) application to establish and/or train a locally-stored computational model ("local model") for any known purpose. For example, the local model may be trained using data from datasets to predict a future event, future outcome or to classify subsequent input data to one or more trained classes. Any ML model or algorithm may be used, such as one or more artificial neural network (ANN), deep neural network (DNN) models, etc.. For example, linear regression is an example of a supervised learning algorithm that may involve gradient descent to minimize a cost function and determine the corresponding parameters or coefficients that result in that minimum cost.

Training the local model usually produces a set of weights or parameters between nodes or neurons, which weights effectively represent the current state of the local model. Other values such as biases and activation functions may form part of the model, but generally speaking, it is the weights or parameters that are learned and updated over time.

A local model may be updated (i.e. re-trained) iteratively given new training data for the dataset. The updating may happen responsive to receiving new data and/or at periodic intervals. Each update iteration may be called a "round."

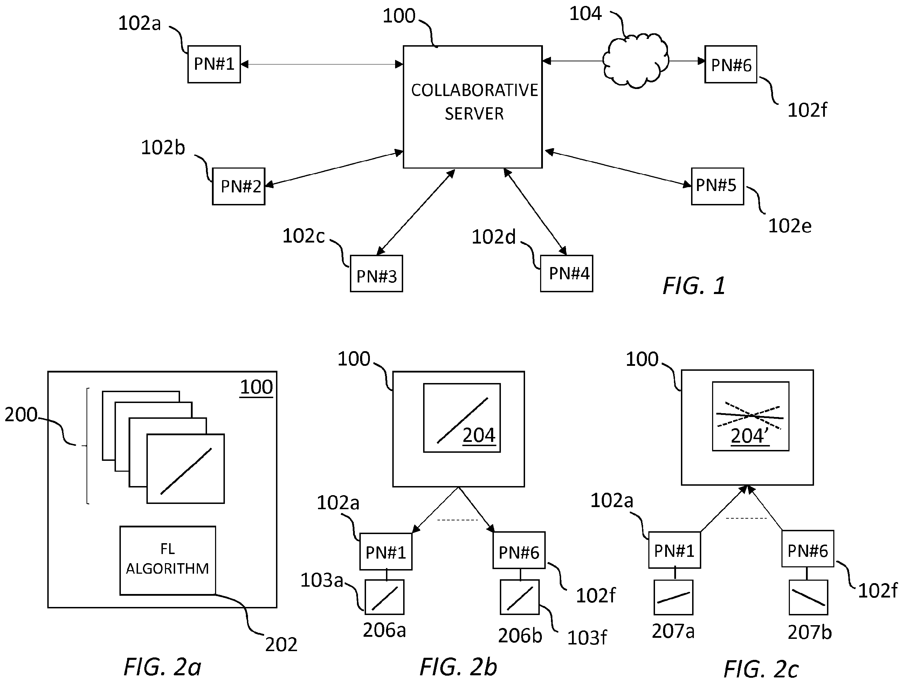

Referring now to FIG. 1, an exemplary schematic architecture for CML is shown, comprising a centralized CML server 100 ("collaborative server") and a plurality of processing nodes 102a - 102f which may comprise any of the above-mentioned examples.

In some example aspects, one of the said processing nodes 102a - 102f may effectively act as the centralized server 100 comprising one or more processors and one or more memory devices for handling CML. In some example aspects, there may be no centralized server 100 and, instead, the one or more processing nodes 102a - 102f store a data representation of how data is to be collaborated among other given processing nodes of a set associated with a particular CML model, whereby training data and the updated CML model, can be shared among said members of the set. In some example aspects, not all processing nodes 102a - 102f are associated with a CML model at a particular time; for example, one such processing node may be a "new" processing node that requests to collaborate with at least some of the other processing nodes in CML.

The processing nodes 102a - 102f may be remote from each other and/or from the collaborative server 100. Intercommunication may be by means of any known wired or wireless communications protocol. For example, intercommunication may be wireless over a local area network (LAN), wide area network (WAN) or the Internet. The intercommunication method may use one or more of short-range wireless communication protocol, such as Bluetooth or WiFi, or cellular telecom e.g. (3G, LTE, 4G, 5G or any future technology) protocols, to give but some examples.

Merely by way of example, FIG. 1 shows an intermediate network entity 104 disposed between one of the processing nodes 102f and the collaborative server 100. The intermediate network 104 may, for example, be a computer platform, such as one or more servers, that can be associated with a particular network operator, e.g. a radio access network (RAN) of a cellular network operator. The intermediate network 104 may also communicate with other nodes, such as one or more base stations (macro cells) and/or one or more access points (small cells). There may therefore be one or more intermediate processing nodes between the collaborative server 100 and one or more of the processing nodes 102a - 102f.

Referring to FIGs. 2a - 2c, example operations in collaborative learning are summarized at a functional level. The collaborative server 100 may provide one or more initial computational models 200 for ML/AI. For example, a model 200 may be for a different respective purpose, e.g. one for image classification, one for predicting a future outcome etc. Additionally, or alternatively, the model 200 may be trained using a different respective FL algorithm 202. Additionally, or alternatively, the model 200 may be trained using data associated with local datasets of different respective processing nodes 102a - 102f. Referring to FIG. 2b, one such model 204 is considered. The model 204 may be provided by the collaborative server 100 to a plurality of the processing nodes 102a - 102f, whether all of them or a particular subset. The relevant processing nodes 102a - 102f may store the initial model 204 as respective local models 206a, 206b on their local memory device(s) 103a - 103f and thereafter run a local ML/AI training algorithm to utilize and/or update locally their initial models to provide updated models 207a - 207b (see FIG. 2c). At a future time, which time may be determined either by the processing nodes 102a - 102f and/or the collaborative server 100, or one or more intermediate entities/nodes 104, the updated local models 207a - 207b may be sent back to the collaborative server 100. This may involve sending only their respective model parameters. At the collaborative server 100, the relevant FL algorithm 202 may update the model 204 to become an updated model 204'. This may involve computing an average of the received and updated parameters.

As mentioned above, example aspects may involve determining one or more properties associated with the one or more processing nodes 102a - 102f.

In one example aspect, the one or more properties may represent a distribution, e.g. a statistical distribution, of the one or more local datasets at the respective processing nodes 102a - 102f. In another example aspect, the one or more properties may be parameters which indicate, or which can be used to determine, the ability of one or more of the processing nodes 102a - 102f to transmit a particular amount of data to the collaborative server 100, whether directly or indirectly. This particular amount of data may be determined based on the amount of data required for a round or iteration of training. For example, this may involve receiving data indicative of the current capacity or bandwidth of the network with which a particular processing node 102a - 102f is associated. For example, this may involve receiving data indicative of a cell or small cell in which a particular processing node 102a - 102f is currently located and the current network conditions, e.g. current data throughput, or at least an estimation thereof. Alternatively, or additionally, this may involve receiving data indicative of how much data is available for a user associated with a particular processing node 102a - 102f. This availability data may be based on the user's current tariff with a given network operator. Alternatively, or additionally, this may involve receiving data indicative of how much energy the particular processing node 102a - 102f has left remaining before shutdown, e.g. the remaining battery life. Alternatively, or additionally, this may also involve receiving data indicative of how much computational resources, such as CPU and/or memory resources, the particular processing node 102a - 102f has. This may also take into account contributory factors, such as a current charging state (charged or not being charged), the rate of charging and/or whether or not the particular processing node 102a - 102f is stationary or mobile.

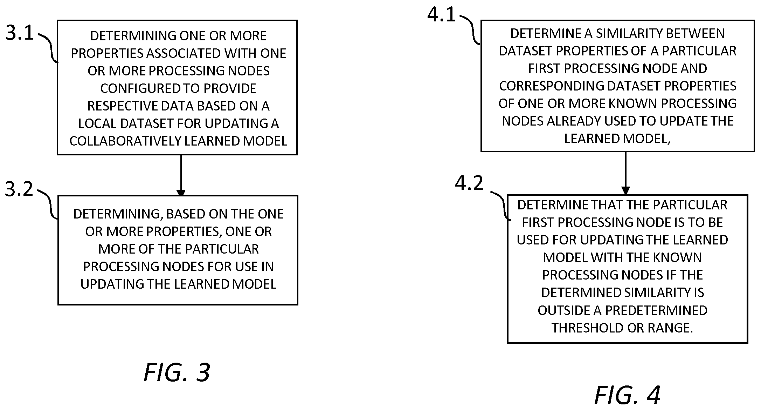

FIG. 3 is a flow diagram indicative of processing operations according to example aspects. The operations may be performed in hardware, software, firmware or a combination thereof. A greater or fewer number of operations may be involved.

A first operation 3.1 may comprise determining one or more properties associated with one or more processing nodes configured to provide or utilize respective data based on a local dataset for updating a collaboratively learned model.

A second operation 3.2 may comprise determining, based on the one or more properties, one or more of the particular processing nodes for use in updating the learned model.

A first example aspect will now be described.

The first example aspect may involve determining a similarity between dataset properties of a particular first processing node and corresponding dataset properties of one or more known processing nodes which may already be used to update a model being collaboratively updated.

In this regard, the first example aspect, and variations thereof, may overcome challenges associated with collaborative learning which relate to variations in data distributions for datasets of the local models. Ideally, datasets of the local models which contribute in CML should have the same distribution. If one dataset from, say, one of the processing nodes 102a - 102f is somewhat different from that of the others, it can delay or prevent, for example, convergence of the CML model. To give a practical example, the processing nodes 102a - 102f may comprise mobile phones which collect speech data from end-users, and provide data (e.g. parameters of their respective local models) to the collaborative server 100 for updating a centralized speech recognition model. There may be variability in one or more of the user accents, background noise conditions and/or heterogeneity in the various mobile phones. As a consequence, the local datasets will have different distributions and hence averaging their gradients at the collaborative server 100 may provide sub-optimal results.

Example aspects may overcome or at least improve such issues by taking into account similarity between datasets before determining that a particular processing node 102a - 102f can contribute to a particular learned model using CML. Note that similarity between datasets may be determined (or estimated) without needing all raw data of the datasets, which may include potentially sensitive data. For example, certain types of distance metrics can determine similarity (or dissimilarity) based on an intermediate format of the dataset raw data using extracted features. Two such examples include the Wasserstein Distance (WD) metric and the Maximum Mean Discrepancy (MMD) metric. A property of the WD metric is that it can be estimated in a distributed manner, without sharing data across processing nodes, and hence providing clear privacy benefits. The MMD metric requires only a small amount of the representative dataset to be shared between processing nodes. In this way, two processing nodes may share their non-sensitive dataset with each other and a similarity or distance computed.

FIG. 4 is a flow diagram indicative of processing operations according to the first example aspect. The operations may be performed in hardware, software, firmware or a combination thereof. A greater number of operations may be involved. For example, the operations may be performed at the collaborative server 100 or in a decentralized manner by one or more of the processing nodes 102a - 102f.

A first operation 4.1 comprises determining a similarity between dataset properties of a particular first processing node and corresponding dataset properties of one or more known processing nodes already used to update the collaboratively learned model.

A second operation 4.2 comprises determining that the particular first processing node is to be used for updating the collaboratively learned model with the known processing nodes only if the determined similarity is outside a predetermined threshold (or range).

In this way, if the determined similarity is too low, i.e. less than the predetermined threshold, or outside of a predetermined range, then the first processing node may be disregarded and not used for updating the learned model.

The similarity may be determined using any known method, and may be based on a statistical distribution of data in the local datasets. For example, the statistical distribution may be determined using features extracted from each local dataset which provide an intermediate representation of said local dataset. For example, the similarity may be determined by computing a mathematical distance metric between the statistical distribution of the first processing node and that of the one or more known processing nodes, and selecting that which has the lowest distance. Two such examples include the WD metric and the MMD metric mentioned above. It will be appreciated that use of a distance metric generally indicates greater dissimilarity using a higher value, and hence, in performance of the operation 4.2, a processing node may be disregarded if its distance is above the predetermined threshold.

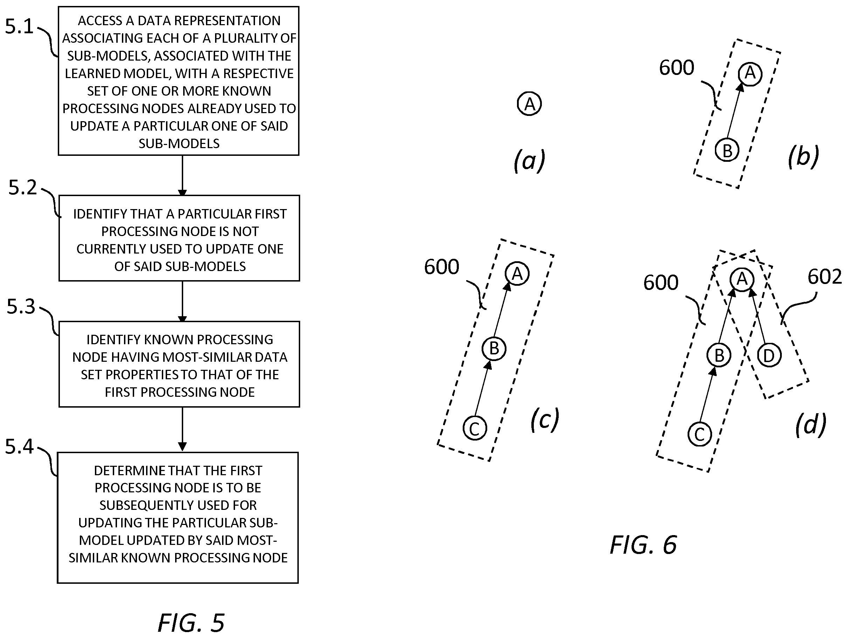

FIG. 5 is a flow diagram indicative of processing operations, also according to such a first example aspect and which may or may not be combined with the FIG. 4 operations. The operations may be performed in hardware, software, firmware or a combination thereof. A greater or fewer number of operations may be involved. For example, the operations may be performed at the collaborative server 100 or another processing node associated with the collaborative server.

A first operation 5.1 may comprise accessing a data representation associating one or more sub-models, associated with the learned model, with a respective set of one or more known processing nodes already used to update a particular one of said sub-models.

A second operation 5.2 may comprise identifying that a particular first processing node is not currently used to update one of the sub-models.

A third operation 5.3 may comprise, responsive to the identification in the second operation 5.2, identifying a known processing node of the representation having the most similar dataset properties to that of the first processing node.

A fourth operation 5.4 may comprise determining that the first processing node is subsequently to be used for updating the particular sub-model updated by the said most-similar known processing node.

In this respect, the learned model may be considered an initial model that may be associated with an initial processing node and the sub-models may be considered specialized versions of the learned model, each specialized version using data associated with a respective cluster of known processing nodes 102a - 102f based on similarity of dataset properties. Each sub-model may be associated with, effectively, a cluster of the one or more known processing nodes 102a - 102f already contributing to the updating of that sub-model. If a new processing node, not already contributing to any of the sub-models, is to update any of the initial model or one of the sub-models, the choice is made as to which model or sub-model (and consequently cluster) to assign it to, based on its most-similar known processing node 102a - 102f. Thereafter, the new processing node is added to the relevant cluster and the associated model or sub-model is updated using data also from the new processing node and well as the previous ones.

The process may be repeated iteratively in successive rounds of collaborative updating.

The advantages resulting from clustering processing nodes in this way include an increased probability of model convergence. If the cluster comprises a subset of nodes with the same or closely-similar data distributions for collaborative learning, we get better convergence during training and hence a more accurate learned model.

Rather than performing pairwise comparison of all data distributions for all processing nodes 102a - 102f, which could be computationally expensive, a hierarchical method could be adopted as follows.

In this respect, the collaborative server 100 may provide, or access, an updatable hierarchical representation of the known processing nodes 102a - 102f. The hierarchical representation may include a root node and one or more descending levels including one or more leaf nodes associated with a respective sub-model, the one or more leaf nodes being linked to a higher-level node having the most similar dataset properties.

In example aspects, identifying the known processing node of the representation having the most similar dataset properties is performed only with respect to a set of candidate nodes comprising the root node and the one or more leaf nodes. For avoidance of doubt, a leaf node is the lowest level of node in a particular branch of the hierarchical "tree" and has no child nodes of its own. Thus, there is no need to perform pairwise comparison for all nodes as the hierarchy grows large to include intermediate nodes (i.e. a node between the root node and a leaf node).

FIGs. 6a - 6d indicate example iterations of such a process in graphical form.

FIG. 6a shows an initial processing node "A" which may be used to initialize the process. The node "A" may be associated with a dataset and may train a learned model using, for example, supervised learning. This initial processing node "A" may represent a "root" node of the hierarchical representation.

Referring to FIG. 6b, when a new processing node "B" wishes to join the process for updating the learned model, the method may determine determining its similarity/distance with regard to initial processing node "A" and (provided it is not too dissimilar based on the above-mentioned threshold example) it may be added as a first level leaf node. The subsequently-updated CML model 600 uses data associated with processing nodes "A" and "B". It may be termed as the CML model 600, or first sub-model of the CML model.

Referring to FIG. 6c, the process may repeat for a new processing node "C" which may have dataset properties most-similar to either node "A" or "B". In this case, processing node "C" is most similar to node "B" and hence is added as a leaf node of node "B". It is therefore associated with the same model 600 which now gets updated based on data from all three nodes "A", "B" and "C".

Referring to FIG. 6d, the process may repeat for a new processing node "D" which may have dataset properties most-similar to node "A", "B" or "C". However, in accordance with an example aspect, "D" is compared only with a candidate set comprising node "A" as the root node, and node "C" as the only leaf node. Node "B" is an intermediate node, and hence no comparison is made, saving processing resources and computation time.

In this case, processing node "D" is most similar to the root node "A" and hence is added as a first-level leaf node of node "A". A new sub-model 602 may be produced which is subsequently updated with data from processing nodes "A" and "D". For the avoidance of doubt, had processing node "D" been most similar to the leaf node "C", then the model 600 would have been updated from all four nodes "A", "B", "C" and "D".

The process outlined in FIG. 5, and shown graphically in FIG. 6, may further include adding to the updatable data representation, whether the hierarchical representation or otherwise, an indication of the first processing node linked to the most similar one of the nodes within said set of known processing nodes. In other words, the representation is updated to reflect the determination, and the newly-added node becomes a leaf node.

In some aspects, the process in any of FIGs. 4 and 5, and the process shown graphically in FIG. 6, may be performed at the collaborative server 100 of FIG. 1. Similarly, the data representation may be stored at the collaborative server 100 for accessing or serving in a centralized manner.

Alternatively, or additionally, the process may be performed at one or more of the processing nodes 102a - 102f in a decentralized manner. For example, a particular processing node 102a - 102f that wishes to join a CML process may determine whether it should or should not join based on its similarity with respect to a predetermined threshold or range. For example, a particular processing node 102a - 102f may determine which of the sub-models it should join based on similarity. For example, a particular known processing node 102a - 102f that receives a request from another "new" processing node wishing to join a CML process may determine whether it should or should not join based on its similarity with respect to a predetermined threshold or range. For example, a particular processing node 102a - 102f may determine if the new processing node should join its cluster or branch of the hierarchical representation.

In the decentralized approach, the data representation (e.g. that shown in FIG. 6, as an example) may be stored at one or more of the processing nodes 102a - 102f and transmitted to other ones of the one or more processing nodes, and configured to send the updatable data representation to the one or more processing nodes, either in response to a request or in response to an update.

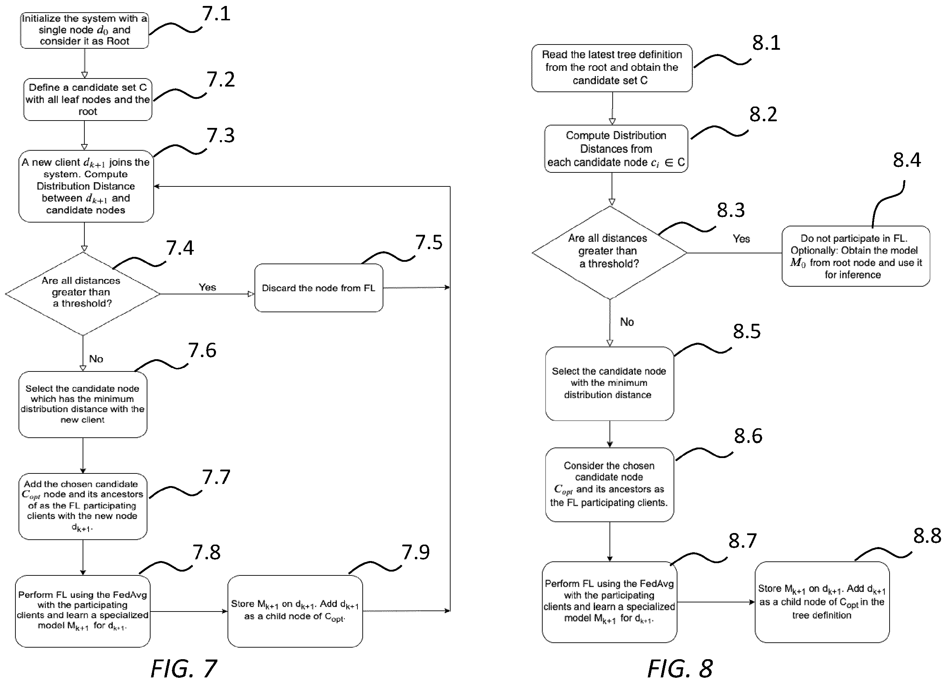

For completeness, FIGs. 7 - 9 provide flow diagrams relating to more detailed example aspects, which are based on FIGs. 4 - 6 and the associated description, using mathematical notation.

With reference to FIG. 7, a first operation 7.1 may comprise process initialization. In this first operation 7.1, there is assumed to be a single processing node d₀ with data (x₀, y₀), which may be the collaborative server 100, or another processing node 102a - 102f, may train a model M₀ using, for example, supervised learning. The processing node d₀ can be considered as a root node of a tree representation.

In a second operation 7.2, the process may define a candidate set C = {Lᵢ U root} which consists of all the 'i' leaf nodes of the tree representation and the root node d₀. Following operation 7.1, there is only one root node in the system, and therefore a candidate set C is generated as C = {root}. However, at any given step k, the candidate set C = {Lₖ U root} where k = 1 ..... number of leaf nodes.

In a third operation 7.3, when a new processing node dₖ₊₁ is to join the process, the collaborative server 100, or another processing node 102a - 102f, may first compute a 'distribution distance' with all the nodes in the candidate set C. The distribution distance, as mentioned, may be a metric which quantifies the distance between two data distributions and which can use, for example, the WD or MMD metrics mentioned above.

We denote the distribution distance between the new processing node and a known candidate processing node Cᵢ in candidate set C as Dist (dₖ₊₁, cᵢ).

In a fourth operation 7.4, if the distribution distance between the new processing node dₖ₊₁ and each candidate node is greater than a certain threshold 'e', this implies that the data distribution is very different from all known processing nodes and, as such, incorporating it in the CML algorithm may degrade the overall accuracy of the model. In this case, the new processing node dₖ₊₁ may be disregarded from the process in a fifth operation 7.5 and we may return to the third operation 7.3.

Otherwise, the process may progress to a sixth operation 7.6 whereby the candidate node of the candidate set C which has the minimum distribution distance with the new processing node dₖ₊₁, i.e., Cₒₚₜ = argmin ₍ᵢ₎ (Dist (dₖ₊₁, cᵢ)) is identified. The intuition is that this chosen candidate processing node has the most similar data distribution, based on the certain threshold, to the new processing node dₖ₊₁ and, as such, performing collaborative learning between them is feasible.

In a seventh operation 7.7, the new node dₖ₊₁ is added to a hierarchical representation, or, put another way, we add the optimal candidate node Cₒₚₜ and all ancestors of Cₒₚₜ in the hierarchical representation, as the participating processing nodes for the a sub-model Mₖ₊₁ associated with Cₒₚₜ.

In an eighth operation 7.8, a CML algorithm is performed for the processing nodes {dₖ₊₁, Cₒₚₜ, ancestors (Cₒₚₜ)} and the relevant sub-model Mₖ₊₁ is updated. FedAvg (Federated Averaging) is mentioned in FIG. 7 as an example of a CML algorithm, but any CML algorithm may be used. The CML algorithm may, for example, be initialized using the learned sub-model already present on Cₒₚₜ and this model can then be fine-tuned using data from {dₖ₊₁, Cₒₚₜ, ancestors (Cₒₚₜ)} to obtain Mₖ₊₁.

In a ninth operation 7.9, Mₖ₊₁ is stored on dₖ₊₁ and dₖ₊₁ is added as a leaf node of Cₒₚₜ.

The process may then return to the third operation 7.3 when a new processing node wishes to join the process.

The above-described process may enable a new processing node to participate in collaborative learning with only those processing nodes whose data distribution is or are similar to the new processing node. By doing this data-driven filtering, the process can ensure that a good prediction model can be learned collaboratively. Aspects may also prevent "model pollution" due to processing nodes having very different data distributions. Some aspects may also de-centralize the collaborative learning process, making it more stable, because there is no longer a dependency on a single root node. Also, as the learning process moves forwards, leaf nodes learn more generalizable models when trained on data from a greater number of processing nodes.

In some aspects, the hierarchical representation can be stored and updated on the root processing node, and this node may provide the first point of contact for any new processing node wishing to join the system.

In some aspects, a key may be provided for the one or more processing nodes, which could be the IP or some other unique address of the respective processing nodes.

In some aspects, the hierarchical representation may be replicated on the one or more processing nodes represented therein, i.e. the one or more processing nodes may keep an updated copy of the representation. In this case, there is no dependency on the root node and the system may become more decentralized.

FIG. 8 is a flow diagram related to FIG. 7, but from the perspective of a new processing node dₖ₊₁ which may perform at least some of the FIG. 7 operations.

A first operation 8.1 may comprise the new processing node dₖ₊₁ reading the current hierarchical representation from, for example, the root processing node and obtaining the candidate set C as mentioned above.

A second operation 8.2 may comprise the new processing node dₖ₊₁ computing the distribution distances between itself and the one or more candidate nodes of the candidate set C.

A third operation 8.3 may comprise the new processing node dₖ₊₁ determining if all distances are greater than the predefined threshold. If so, in a fourth operation 8.4, the new processing node dₖ₊₁ may determine not to participate in the CML process. Optionally, the new processing node dₖ₊₁ may obtain the initial model from the root processing node and use it for inference.

Otherwise, in a fifth operation 8.5, the new processing node dₖ₊₁ may select the candidate node of the candidate set C with the minimum distribution distance.

In a sixth operation 8.6, the new processing node dₖ₊₁ may consider the selected candidate node in operation 8.5 and its ancestors as the processing nodes participating in updating a particular sub-model.

In a seventh operation 8.7, the new processing node dₖ₊₁ may perform a CML algorithm (e.g. FedAvg) for the participating processing nodes and the relevant sub-model Mₖ₊₁ may be updated.

In an eighth operation 8.8, Mₖ₊₁ is stored on dₖ₊₁ and dₖ₊₁ is added as a leaf node of Cₒₚₜ in the data representation or hierarchy.

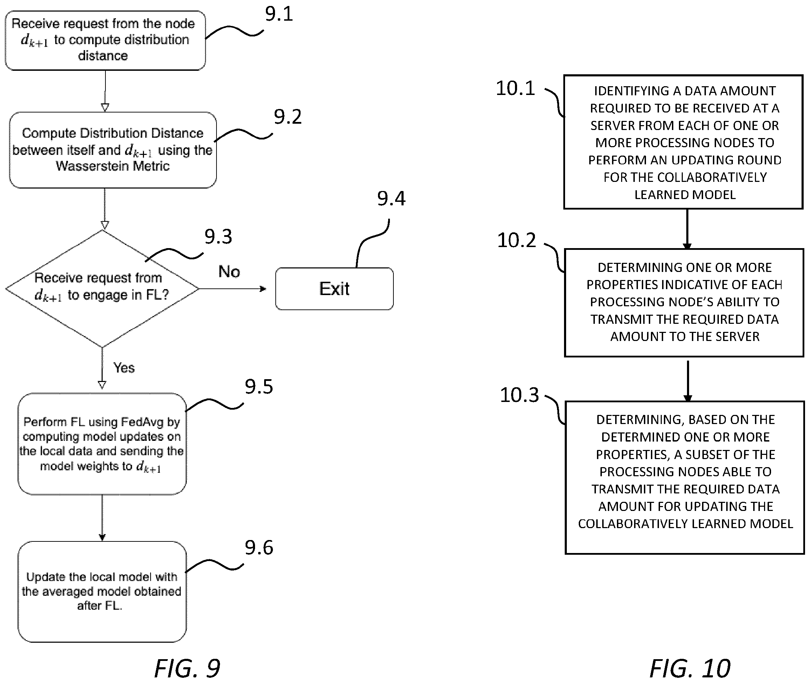

FIG. 9 is a flow diagram related to FIG. 7, but from the perspective of a given known processing node which may perform at least some of the FIG. 7 operations instead of the collaborative server 100.

In a first operation 9.1, the known processing node may receive a request from a new processing node dₖ₊₁ to compute a distribution distance.

In a second operation 9.2, the known processing node may compute a distribution distance between itself and the new processing node dₖ₊₁ to compute the distribution distance, e.g. using the WD metric.

In a third operation 9.3, the known processing node may receive a request from the new processing node dₖ₊₁ to engage in collaborative learning. If the known processing node determines a negative response, e.g. due to the distance being too great, then a fourth operation 9.4 may exit the process.

In a fifth operation 9.5, the known processing node may perform a collaborative updating algorithm (e.g. FedAvg) by computing model updates on the local data and sending the model weights to the new processing node dₖ₊₁.

In a sixth operation 9.6, the local model at the known processing node may be updated with the averaged model obtained in the fifth operation 9.5.

In some general examples of the system, a new client obtains a 'virtual' or 'logical' tree-topology from the root node or the FL model developer and first builds the candidate set. Then, for each node in the candidate set, it calculates a pairwise distance with it. For this purpose, the new client can send a small representative, non-sensitive dataset to the candidate node. The implementation of the distance calculation will depend on the distance metric used for computing distribution divergence, e.g., if a Wasserstein distance is used, we can train a binary classifier wherein all the samples from the client are labeled as 0 and all samples from a candidate node are labeled as 1. The loss of this binary classifier is used as a proxy for Wasserstein Distance - higher the loss, higher the Wasserstein Distance, and further the two distributions are from each other. If we use Maximum Mean Discrepancy (MMD) as the Distance metric, then the new client sends some representative dataset to each node in the candidate set C, and the MMD distance is computed by comparing the mean of the samples from both nodes. Higher the MMD, further the two distributions are from each other. In the case when there are multiple nodes in each one or more branches of the tree. In this case, the system takes the leaf node as the representative node for that branch. This is a design choice to reduce the number of candidate nodes in the set C. In other examples, one the system may randomly assign 'k' nodes from each branch in the candidate set, which may boost the selection accuracy at the expense of increasing the number of comparisons.

Further, considering a use case, where the collaborative server 100 does the distance calculation, it is possible that the server 100 first calculates the distances (or receives them from the clients) and creates the tree structure, when the developer server 100 needs to run federated learning for some ML algorithm, it selects the primary candidate clients based on the three information and then determines which of the primary candidate clients have computational and network related resources available to participate the learning (based on some criteria).

Example use cases now follow.

Consider a setting where a company plans to offer a speech recognition solution for English language. One approach is to collect speech training data from a large number of user devices, store the data on a cloud server and train a ML model. However, this comes at the expense of user privacy. Instead, the company employs CML as a solution. They will initially train a model on a small set of data that they own (e.g. at a root processing node) and thereafter deploy this model to thousands of processing devices so that it can be improved collaboratively using private speech data from the one or more other processing devices. In practice, users associated with the processing devices may have very different English accents and/or may use different smartphones to record their speech. These factors would mean that the speech data across the processing devices could potentially have high distribution divergence. In this situation, merely averaging the gradients from the one or more processing nodes is unlikely to result in an optimal speech recognition model.

According to example aspects, the processing nodes may be hierarchically arranged in a tree-like topology wherein each branch of the tree would represent clients with similar distributions (e.g., English speakers with an American accents, English speakers with Chinese accents and so on). Moreover, the leaf nodes of each branch will hold specialized models, trained specifically for the data distribution corresponding to that particular branch. If a new processing node, associated with a new speaker such as an English speaker with a Chinese accent, joins the collaborative learning system, he/she will first compute distribution distances with one or more candidate nodes (the leaf and root processing nodes) and this will likely select those candidate processing nodes which lie on the branch with Chinese accents as the participating nodes for collaborative learning. Alternatively, if a speaker with an Indian accent joins, he/she may find that none of the leaf nodes are suitable candidates and, instead may be better to collaboratively train with the original root node. This would then create a new branch of the tree.

In effect, example aspects scale collaborative learning to situations where data distributions are not the same and are unlikely to be known in advance. Processing nodes can be automatically arranged in a hierarchy to ensure that the collaborative learning process does not get polluted by processing nodes with highly divergent data distributions.

As another example, in smart hospitals, data from patients can be analyzed to develop intelligent systems that can assist doctors and nurses. Examples include detection of fetal abnormalities from sonogram images. Due to the sensitive nature of medical data, sharing such data across hospitals has ethical and/or legal concerns. Therefore, collaborative learning has a role. A challenge may come from the fact that patients in hospitals have different demographic attributes (ethnicities, age, gender etc.) and therefore merely averaging the model gradients from different hospitals or different patients may not be optimal. Instead, using example aspects described herein, only similar groups will participate in the training process (e.g., people with similar ethnicities) which may result in more specialized and accurate models for each group.

Still as another example, in smart wearable devices, data from a users' wearable device can be analyzed to develop intelligent systems that can detect various motion patterns. Examples include detection and development of new movement/exercise patterns. Due to the sensitive nature of personal data, sharing such data across users and/or system developer has ethical and/or legal concerns. Therefore, collaborative learning has a role. A challenge may come from the fact that users have different demographic attributes (ethnicities, age, gender etc.), different body types, different body sizes, etc. and therefore merely averaging the model gradients from multiple users may not be optimal. Instead, using example aspects described herein, only similar groups will participate in the training process (e.g., people with similar body type and size) which may result in more specialized and accurate models for each group.

A second aspect will now be described, also for determining which processing nodes to use for updating a CML model. The second aspect may be used with, or independent of, the first aspect features described herein.

FIG. 10 is a flow diagram indicative of processing operations, also according to further aspects of the solution. The operations may be performed in hardware, software, firmware or a combination thereof. A greater or fewer number of operations may be involved. For example, the operations may be performed at the collaborative server 100 of FIG. 1 or another processing node associated with the collaborative server, for example a platform associated with a RAN operator.

A first operation 10.1 may comprise identifying a data amount required to be received at and/or transmitted from a server, from/to the one or more processing nodes, to perform an updating round for the collaboratively learned model.

A second operation 10.2 may comprise determining one or more properties indicative of a processing node's ability to transmit and/or receive the required data amount to/from the server.

A third operation 10.3 may comprise determining, based on the determined one or more properties, a subset of the processing nodes which are able to transmit and/or receive the required data amount for updating the learned model in the updating round.

For example, the first to third operations 10.1 - 10.3 may be performed at the intermediate network entity 104 which may be associated, e.g. with a particular RAN operator, and the intermediate network entity may receive one or more messages indicative of the data amount from the collaborative server 100. The intermediate network entity 104 may be at the cellular level, e.g. macro cell, or local access point level, e.g. small cell.

In CML, the collaborative server 100 may send its CML model parameters/gradients, and/or the CML model structure/architecture to one or more processing nodes, for example processing nodes 102a - 102f selected based on their data similarity as in an above-described first aspect. The processing nodes 102a - 102f may then use their own data (e.g. sensor data) to train the received (local) version of the CML model with the parameters/gradients, and, once ready, the processing nodes may send only the parameters/gradients of their locally trained model back to the collaborative server 100. The collaborative server 100 may collect and analyze the parameters from the one or more processing nodes and may update the CML model structure/architecture and/or the parameter/gradients. The process may repeat for several rounds, i.e. the server 100 may send the updated parameters/gradients, and/or the updated CML model structure/architecture to the one or more processing nodes, and receive the newly trained results back. No sensor data that is used for the training the local models need be sent by the one or more processing nodes. The training happens in the processing nodes and they may only send to the collaborative server 100 their model parameters.

The required data amount may be determined using any known means. For example, the collaborative server 100 may determine the amount based on the size M of the CML model being trained. For example, the size M may relate or correspond to the number of parameters/gradients that represent the CML model, and additionally to the structure/architecture of the CML model, as well as how the parameters are represented in data form, e.g. x KB or MB per parameter. The amount may therefore relate to the total amount of data required to represent the M parameters of the CML model. The amount may therefore be defined as 2*M to reflect the sending and receiving of the M parameters between the collaborative server 100 and one of the one or more processing nodes 102a - 102f.

For additional context, if the number of processing nodes 102a - 102f chosen in each round of updating is C, in each round there will be an amount or quantity of 2*M*C data flowing through the network. This is because the data representing the model parameters/gradients, and/or the structure/architecture of the CML model, may be sent to the one or more processing nodes 102a - 102f and then data representing the updated model parameters received back from the one or more processing nodes later on. If we take the widely used ResNet-50 CML model whose size (M) is around 100 MB and train it with just C=100 clients, this will result in 20GB of data flowing through the network for each round of CML. Typically, CML algorithms for object detection require 70-100 rounds of training, which means almost 1.4 - 2 TB of data passing through the network for training a single CML model.

Example aspect therefore seek to alleviate the potentially major burden for, in particular, mobile networks required to transfer such data amounts, as well as end-users of the processing nodes 102a - 102f. For example, end-users may have a data plan associated with a RAN operator which limits their data usage; a user may inadvertently have their available data used up very quickly which will then prevent further data to be provided to the collaboration server 100 or other nodes performing the CML model update. Alternatively or additionally, the processing node 102 can have its own data plan that is unrelated to any end-user.

The determined one or more properties may, for example, comprise an available bandwidth of a wireless network over which the one or more processing nodes transmit their respective data to the server. The current available bandwidth may, for example, be determined for a cell level, e.g. macro cell or small cell of a wireless network, with which the one or more processing nodes is or are currently associated. A small cell is understood to relate to a low-powered and/or short-range radio access node having a range much smaller than that of traditional RAN base station macro cells. The small cell range is typically around ten meters.

Alternatively, or additionally, the determined one or more properties may, for example, comprise a quantity of available data associated with a data plan for the one or more processing nodes.

Alternatively, or additionally, the determined properties may comprise remaining battery life and/or computational resources, such as CPU and/or memory resources of the one or more processing nodes.

By following such an approach, the process can distribute the load of running CML across an entire communication network and prevent any specific network segments or cells from becoming overloaded. In addition, this also improves the user-experience as the solution may be determined based on properties, such as available data, e.g. 5G data, and/or the properties of the one or more processing nodes.

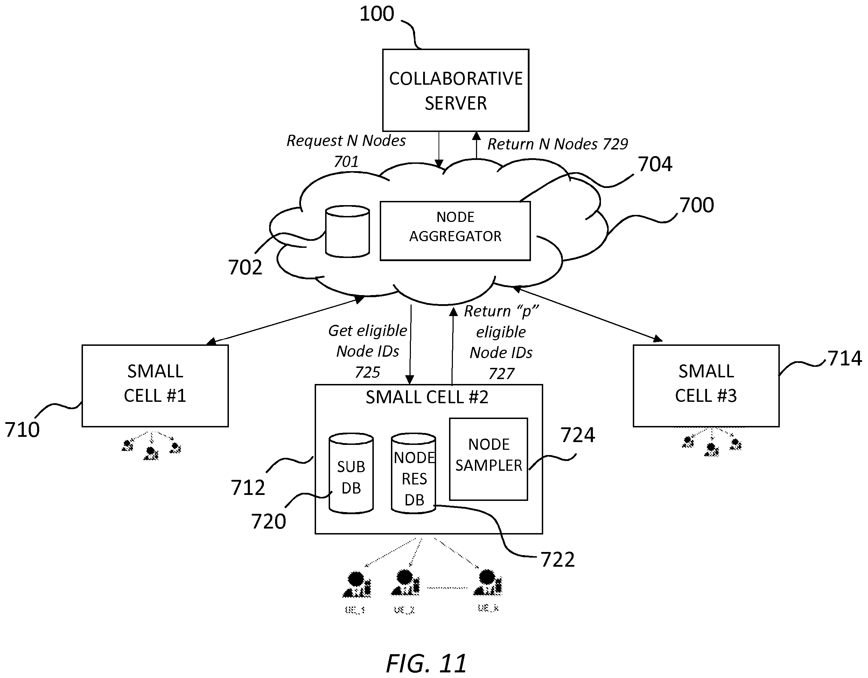

FIG. 11 is a schematic diagram which is useful for explaining how the collaborative server 100 may work with another network node 700, such as a network provider platform, to get the required resources, for example amount of training data, to train a ML model according to the CML technique whilst achieving the above advantages.

The collaborative server 100 is shown in communication with a network or platform 700 that may be associated with a network provider or a network owner. The network provider platform 700 may comprise a subscriber database 702 and a node aggregator 704. The subscriber database 702 may store a list of one or more subscribers who have opted into participating and/or providing training data for CML with the collaborative server 100. Additionally or alternatively, the subscriber database 702 may also store a list of one or more devices, such as processing nodes 102a -102f, which have opted into participating and/or providing training data for CML with the collaborative server 100. Additionally or alternatively, the one or more subscribers and/devices may have also opted into providing training data for the CML at the collaborative server 100.

The collaborative server 100 may send to the network provider platform 700 a request 701 for a number of nodes C to provide data for the CML in a current round of updating and/or training. The request 701 may also indicate the size of model M being trained, for example in terms of Mbytes. Alternatively, or additionally, the collaborative server 100 may send to the network provider platform 700 a request 701 for a number of nodes C which can participate the CML in a current round of training. Alternatively or additionally, the request 701 may also indicate a list of candidate nodes, such as one or more of the processing nodes 102a -102f, which have local dataset similar relating to the model M and/or the dataset of the model M.

In response to the request 701, the node aggregator 704 may read the subscriber and/or device database 702 and transmits a second request 725 to, in this case, one or more cells 710, 712, 714 associated with the network provider/owner in which one or more subscribers/processing nodes are located / connected to. The second request 725 may comprise the value of 2*M*C (required data amount) to enable its determination or estimation on capability of the one or more cells, and/or the one or more processing nodes on the one or more cells, to provide the required data amount, and/or to participate the CML. In one example, the second request 725 may be sent to one or more cells which have one or more of the candidate nodes.

Components of one of said cells 712 are shown in further detail, and comprise a subscriber database 720, and/or, a node resources database 722 storing information on one or more processing nodes 102, and a node sampler 724.

In response to the second request 725, the node sampler 724 may check current network traffic passing through the cell to determine if it can currently handle the quantity of data required, e.g. 2.M.C. If the latter is higher than the current network bandwidth, the second request 725 is either ignored or zero nodes may be returned in a return message 727. In some aspects, it may return data from a smaller number of processing nodes that it can accommodate. Assuming that there is capacity at the cell 712, the node sampler 724 may read the subscriber database 720, and/or the node resources database 722, to determine the available resources, e.g. one or more of data quota and one or more the processing nodes, considering, for example, battery life remaining, current charging state, current mobility state, memory resources, or CPU resources, of the one or more identified processing nodes and/or associated subscribers in that cell 712. If less than a predetermined threshold, the particular node may not be selected, the threshold possibly being one arranged with the network provider/owner beforehand. The node sampler 724 may also read the node resource database 722 to read one or more node-specific resource parameters, such as data quota, battery life remaining, current charging state, current mobility state, memory resources, or CPU resources, etc. Such resource parameters may be reported by the particular node to the node resource database 722 periodically and stored in the node resource database 722; possibly periodically as part of a standard. The node sampler 724 may apply a predetermined condition on each of said one or more resource parameters, e.g. is battery life > 80%, battery state = charging, mobility = stationary etc., to filter the nodes that are eligible to contribute to the CML at the current or determined future time.

The return message 727 may thereafter indicate to the network provider platform 700 and/or the node aggregator 704 a list of "p" eligible nodes and/or subscribers from the particular cell 712.

The network provider platform 700 may receive in a similar manner a list of one or more such eligible nodes from the one or more cells 710, 712, 714 in which the one or more subscribers and/or the one or more processing nodes are located. The node aggregator 704 aggregates the one or more lists, and may sample "N" nodes and/or N subscriber from the aggregated list (if there are more than N eligible nodes) which are identified to the collaborative server 100 in a return message 729. The one or more lists of the sample "N" nodes and/or the sample N subscriber may be stored in the database 702.

The collaborative server 100 may then establish separate communications with the one or more N identified nodes and a CML training round initiated.

Optionally, the node aggregator 704 may keep track of the cells 710, 712, 714 which contributed in the current round of CML. In the next round, the node aggregator 704 may sample one or more nodes from at least one different cell. This may ensure that the load is balanced across the entire network so that no single cell is overloaded. This also may ensure that the ML model is trained with wider data distribution.

In terms of examples described herein, the collaborative server 100 may be configured to use the mentioned data representations of the one or more subscribers and/or the one or more processing nodes 102a -102f,, e.g. the hierarchical representation of local data similarity of the one or more nodes, to determine which processing nodes should or could be used to train, e.g. to provide a round of updating, a ML model. Then, those one or more identified nodes may be filtered based on their associated network and/or computational resources. Other variations may be envisaged.

In terms of example aspect as described herein, the collaborative server 100, the node aggregator 704 and the subscriber and/or device database 702 may reside in a same entity and/or may be managed by the same entity, e.g. the collaborative server 100 or the node aggregator 704. Further, the node aggregator 704 may reside in one or more the cells 710, 712, and/or 714.

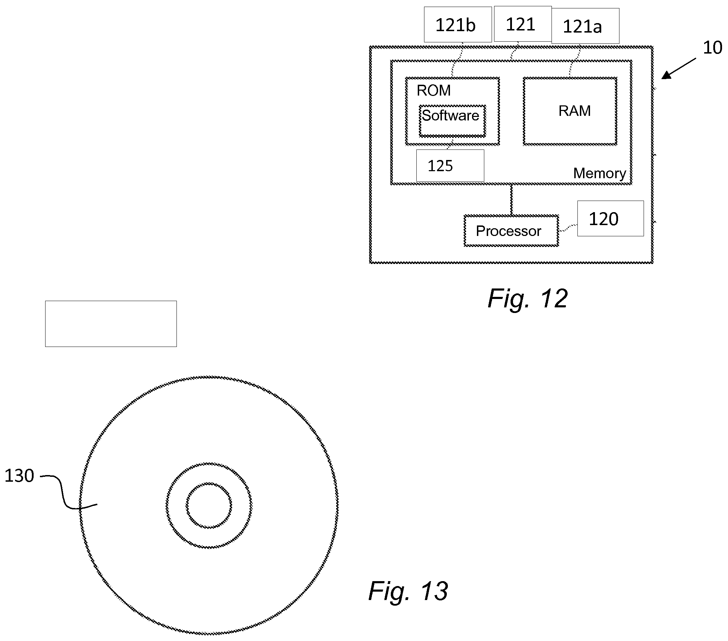

FIG. 12 shows an apparatus 10 aspect relating to the various devices described above, such as 100, 102, 103, 700, 704, 712, 722 and/or 724. The apparatus may be configured to perform the operations described herein, for example operations described with reference to any preceding process. The apparatus comprises at least one processor 120 and at least one memory 121 directly or closely connected to the processor. The memory 121 includes at least one random access memory (RAM) 121a and at least one read-only memory (ROM) 121b. One or more computer program code (software) 125 is stored in the ROM 121b. The apparatus may be connected to one or more transmitter (TX) and a receiver (RX) of various communication protocols. The apparatus may, optionally, be connected with one or more user interface (UI) for instructing the apparatus and/or for outputting data. The at least one processor 120, with the at least one memory 121 and the computer program code 125 are arranged to cause the apparatus to at least perform at least the method according to any preceding process.

FIG. 13 shows a non-transitory media 130 according to some aspects. The non-transitory media 130 is a computer readable storage medium. It may be e.g. a CD, a DVD, a USB stick, a blue ray disk, or any hardware memory, etc. The non-transitory media 130 stores computer program code, causing an apparatus to perform the method of any preceding process.

User inputs may be gestures which comprise one or more of a tap, a swipe, a slide, a press, a hold, a rotate gesture, a static hover gesture proximal to the user interface of the device, a moving hover gesture proximal to the device, bending at least part of the device, squeezing at least part of the device, a multi-finger gesture, tilting the device, or flipping a control device. Further the gestures may be any free space user gesture using the user's body, such as their arms, or a stylus or other element suitable for performing free space user gestures.

The apparatus 10 shown in the above examples may be a portable electronic device, a mobile communication device, an IoT device, a sensor device, a laptop computer, a mobile phone, a Smartphone, a tablet computer, a personal digital assistant, a digital camera, a smartwatch, smart eyewear, a pen based computer, a non-portable electronic device, a desktop computer, a monitor, a smart TV, a server, a network access point, a router, a base station, a wearable apparatus, a virtual reality apparatus, or a module/circuitry for one or more of the same, or any combination thereof.

Any mentioned apparatus 10 and/or other features of particular mentioned apparatus may be provided by apparatus arranged such that they become configured to carry out the desired operations only when enabled, e.g. switched on, or the like. In such cases, they may not necessarily have the appropriate software loaded into the active memory in the non-enabled (e.g. switched off state) and only load the appropriate software in the enabled (e.g. on state). The apparatus may comprise hardware circuitry and/or firmware. The apparatus may comprise software loaded onto memory. Such software/computer programs may be recorded on the same memory/processor/functional units and/or on one or more memories/processors/ functional units.

In some examples, a particular mentioned apparatus 10 may be pre-programmed with the appropriate software to carry out desired operations, and wherein the appropriate software can be enabled for use by a user downloading a "key", for example, to unlock/enable the software and its associated functionality. Advantages associated with such examples can include a reduced requirement to download data when further functionality is required for a device, and this can be useful in examples where a device is perceived to have sufficient capacity to store such pre-programmed software for functionality that may not be enabled by a user.

Any mentioned apparatus 10/circuitry/elements/processor may have other functions in addition to the mentioned functions, and that these functions may be performed by the same apparatus/circuitry/elements/processor. One or more disclosed aspects may encompass the electronic distribution of associated computer programs and computer programs (which may be source/transport encoded) recorded on an appropriate carrier (e.g. memory, signal).

Any "computer" described herein can comprise a collection of one or more individual processors/processing elements that may or may not be located on the same circuit board, or the same region/position of a circuit board or even the same device. In some examples one or more of any mentioned processors may be distributed over a plurality of devices. The same or different processor/processing elements may perform one or more functions described herein.

The term "signalling" may refer to one or more signals transmitted as a series of transmitted and/or received electrical/optical signals. The series of signals may comprise one, two, three, four or even more individual signal components or distinct signals to make up said signalling. Some or all of these individual signals may be transmitted/received by wireless or wired communication simultaneously, in sequence, and/or such that they temporally overlap one another.

With reference to any discussion of any mentioned computer and/or processor and memory (e.g. including ROM, CD-ROM etc), these may comprise a computer processor, Application Specific Integrated Circuit (ASIC), field-programmable gate array (FPGA), and/or other hardware components that have been programmed in such a way to carry out the inventive function.

The applicant hereby discloses in isolation each individual feature described herein and any combination of two or more such features, to the extent that such features or combinations are capable of being carried out based on the present specification as a whole, in the light of the common general knowledge of a person skilled in the art, irrespective of whether such features or combinations of features solve any problems disclosed herein, and without limitation to the scope of the claims. The applicant indicates that the disclosed aspects/examples may consist of any such individual feature or combination of features. In view of the foregoing description it will be evident to a person skilled in the art that various modifications may be made within the scope of the disclosure.

While there have been shown and described and pointed out fundamental novel features as applied to examples thereof, it will be understood that various omissions and substitutions and changes in the form and details of the devices and methods described may be made by those skilled in the art within the scope of the appended claims.

Moreover, it should be recognized that structures and/or elements and/or method steps shown and/or described in connection with any disclosed form or examples may be incorporated in any other disclosed or described or suggested form or example as a general matter of design choice. Furthermore, in the claims means-plus-function clauses are intended to cover the structures described herein as performing the recited function and not only structural equivalents, but also equivalent structures. Thus although a nail and a screw may not be structural equivalents in that a nail employs a cylindrical surface to secure wooden parts together, whereas a screw employs a helical surface, in the environment of fastening wooden parts, a nail and a screw may be equivalent structures.

## Claims

1. Apparatus, comprising means for performing:
determining one or more properties associated with one or more processing nodes, the one or more processing nodes configured to utilize respective data based on a local dataset of one or more particular processing nodes for updating a collaboratively learned model, wherein the one or more properties associated with the one or more particular processing nodes are based on one or more properties of its local dataset;
determining (4.1) a similarity between dataset properties of a particular first processing node and corresponding dataset properties of one or more known processing nodes already used to update the collaboratively learned model; and
determining (4.2) that the first processing node is to be used for updating the collaboratively learned model with the known processing nodes only if the determined similarity is within a predetermined threshold.

2. The apparatus of claim 1, wherein the means is further configured for:
Accessing (5.1) a data representation, associating one or more sub-models associated with the learned model with a respective set of one or more known processing nodes already used to update a particular one of said sub-models,
wherein the means is further configured for, responsive to identifying (5.2) that the particular first processing node is not currently used to update any one of the sub-models, identifying (5.3) a known processing node of the representation having the most similar dataset properties to that of the first processing node, and determining (5.4) that the first processing node is subsequently to be used for updating the particular sub-model updated by said most-similar known processing node.

3. The apparatus of claim 2, wherein the determined sub-model is subsequently updated using data from the first processing node and all other known processing nodes already used to update the sub-model, and the data representation updated to include the first processing node.

4. The apparatus of claim 2 or claim 3, wherein the updatable data representation comprises a hierarchical representation of the known processing nodes, including a root node associated with the learned model and one or more descending levels including one or more leaf nodes associated with a respective sub-model, the one or more leaf nodes being linked to a higher-level node having the most similar dataset properties, wherein identifying the known processing node of the representation having the most similar dataset properties is performed only with respect to a set of candidate nodes comprising the root node and the one or more leaf nodes.

5. The apparatus of any of claims 2 to 4, wherein the data representation is stored at a centralized collaborative server for access by the one or more processing nodes.

6. The apparatus of any of claims 2 to 4, wherein the data representation is stored at one or more of the processing nodes and transmitted to other ones of the one or more processing nodes.

7. The apparatus of any of claims 1 to 6, wherein the similarity is determined based on a statistical distribution of data in the local datasets.

8. The apparatus of any of claims 1 to 7, wherein the means is further configured for performing said determination, responsive to a request received from the first processing node, the request including the one or more properties of its local dataset.

9. A computer-implemented method, comprising:
determining one or more properties associated with one or more processing nodes, the one or more processing nodes configured to utilize respective data based on a local dataset of one or more particular processing nodes for updating a collaboratively learned model, wherein the one or more properties associated with the one or more particular processing nodes are based on one or more properties of its local dataset;
determining (4.1) a similarity between dataset properties of a particular first processing node and corresponding dataset properties of one or more known processing nodes already used to update the collaboratively learned model; and
determining (4.2) that the first processing node is to be used for updating the collaboratively learned model with the known processing nodes only if the determined similarity is within a predetermined threshold.

10. The method of claim 9, further comprising:
Accessing (5.1) a data representation, associating one or more sub-models associated with the learned model with a respective set of one or more known processing nodes already used to update a particular one of said sub-models,
responsive to identifying (5.2) that the particular first processing node is not currently used to update any one of the sub-models, identifying (5.3) a known processing node of the representation having the most similar dataset properties to that of the first processing node, and determining (5.4) that the first processing node is subsequently to be used for updating the particular sub-model updated by said most-similar known processing node.

11. A computer-readable medium (130) comprising program instructions stored thereon which, when executed by a computer, cause the computer to perform the method of:
determining one or more properties associated with one or more processing nodes, the one or more processing nodes configured to utilize respective data based on a local dataset of one or more particular processing nodes for updating a collaboratively learned model, wherein the one or more properties associated with the one or more particular processing nodes are based on one or more properties of its local dataset;
determining (4.1) a similarity between dataset properties of a particular first processing node and corresponding dataset properties of one or more known processing nodes already used to update the collaboratively learned model; and
determining (4.2) that the first processing node is to be used for updating the collaboratively learned model with the known processing nodes only if the determined similarity is within a predetermined threshold.

## Patentansprüche

1. Einrichtung, die Mittel zum Durchführen von Folgendem umfasst:
Bestimmen von einer oder mehreren Eigenschaften, die mit einem oder mehreren Verarbeitungsknoten verknüpft sind, wobei der eine oder die mehreren Verarbeitungsknoten dazu ausgelegt sind, jeweilige Daten auf Basis eines lokalen Datensatzes von einem oder mehreren speziellen Verarbeitungsknoten zum Aktualisieren eines kollaborativ gelernten Modells zu nutzen, wobei die eine oder die mehreren Eigenschaften, die mit dem einen oder den mehreren speziellen Verarbeitungsknoten verknüpft sind, auf einer oder mehreren Eigenschaften auf deren lokalem Datensatz basieren;
Bestimmen (4.1) einer Ähnlichkeit zwischen Datensatzeigenschaften eines speziellen ersten Verarbeitungsknotens und entsprechenden Datensatzeigenschaften von einem oder mehreren bekannten Verarbeitungsknoten, die bereits verwendet werden, um das kollaborativ gelernte Modell zu aktualisieren; und
Bestimmen (4.2), dass der erste Verarbeitungsknoten zum Aktualisieren des kollaborativ gelernten Modells mit den bekannten Verarbeitungsknoten nur zu verwenden ist, wenn die bestimmte Ähnlichkeit innerhalb eines vorbestimmten Schwellwerts liegt.

2. Einrichtung nach Anspruch 1, wobei die Mittel ferner zu Folgendem ausgelegt sind:
Zugreifen (5.1) auf eine Datenrepräsentation, die ein oder mehrere Untermodelle, die mit dem gelernten Modell verknüpft sind, mit einem jeweiligen Satz von einem oder mehreren bekannten Verarbeitungsknoten verknüpft, die bereits verwendet werden, um ein spezielles der Untermodelle zu aktualisieren,
wobei die Mittel in Reaktion auf das Identifizieren (5.2), dass der spezielle erste Verarbeitungsknoten derzeit nicht verwendet wird, um eines der Untermodelle zu aktualisieren, ferner zum Identifizieren (5.3) eines bekannten Verarbeitungsknotens der Repräsentation, der die ähnlichsten Datensatzeigenschaften mit denen des ersten Verarbeitungsknotens aufweist, und Bestimmen (5.4), dass der erste Verarbeitungsknoten nachfolgend zum Aktualisieren des speziellen Untermodells, das vom ähnlichsten bekannten Verarbeitungsknoten aktualisiert wurde, zu verwenden ist, ausgelegt sind.

3. Einrichtung nach Anspruch 2, wobei das bestimmte Untermodell nachfolgend unter Verwendung von Daten vom ersten Verarbeitungsknoten und allen anderen bekannten Verarbeitungsknoten, die bereits verwendet werden, um das Untermodell zu aktualisieren, und der Datenrepräsentation, die derart aktualisiert wird, dass sie den ersten Verarbeitungsknoten beinhaltet, aktualisiert wird.

4. Einrichtung nach Anspruch 2 oder Anspruch 3, wobei die aktualisierbare Datenrepräsentation eine hierarchische Repräsentation der bekannten Verarbeitungsknoten umfasst, die einen Wurzelknoten, der mit dem gelernten Modell und einer oder mehreren absteigenden Ebenen, die ein oder mehrere Blattknoten beinhalten, die mit dem jeweiligen Untermodell verknüpft sind, beinhalten, wobei der eine oder die mehreren Blattknoten mit einem Knoten einer höheren Ebene verbunden sind, der die ähnlichsten Datensatzeigenschaften aufweist, wobei das Identifizieren des bekannten Verarbeitungsknotens der Repräsentation, die die ähnlichsten Datensatzeigenschaften aufweist, nur mit Bezug auf einen Satz von Knotenkandidaten durchgeführt wird, die den Wurzelknoten und den einen oder die mehreren Blattknoten umfassen.

5. Einrichtung nach einem der Ansprüche 2 bis 4, wobei die Datenrepräsentation für einen Zugriff durch den einen oder die mehreren Verarbeitungsknoten auf einem zentralisierten kollaborativen Server gespeichert ist.

6. Einrichtung nach einem der Ansprüche 2 bis 4, wobei die Datenrepräsentation an einem oder mehreren der Verarbeitungsknoten gespeichert ist und zu anderen des einen oder der mehreren Verarbeitungsknoten übertragen wird.

7. Einrichtung nach einem der Ansprüche 1 bis 6, wobei die Ähnlichkeit auf Basis einer statistischen Verteilung von Daten in den lokalen Datensätzen bestimmt wird.

8. Einrichtung nach einem der Ansprüche 1 bis 7, wobei die Mittel in Reaktion auf eine Anforderung, die vom ersten Verarbeitungsknoten empfangen wird, ferner zum Durchführen der Bestimmung ausgelegt sind, wobei die Anforderung die eine oder die mehreren Eigenschaften ihres lokalen Datensatzes beinhaltet.

9. Computerimplementiertes Verfahren, das Folgendes umfasst:
Bestimmen von einer oder mehreren Eigenschaften, die mit einem oder mehreren Verarbeitungsknoten verknüpft sind, wobei der eine oder die mehreren Verarbeitungsknoten dazu ausgelegt sind, jeweilige Daten auf Basis eines lokalen Datensatzes von einem oder mehreren speziellen Verarbeitungsknoten zum Aktualisieren eines kollaborativ gelernten Modells zu nutzen, wobei die eine oder die mehreren Eigenschaften, die mit dem einen oder den mehreren speziellen Verarbeitungsknoten verknüpft sind, auf einer oder mehreren Eigenschaften auf deren lokalem Datensatz basieren;
Bestimmen (4.1) einer Ähnlichkeit zwischen Datensatzeigenschaften eines speziellen ersten Verarbeitungsknotens und entsprechenden Datensatzeigenschaften von einem oder mehreren bekannten Verarbeitungsknoten, die bereits verwendet werden, um das kollaborativ gelernte Modell zu aktualisieren; und
Bestimmen (4.2), dass der erste Verarbeitungsknoten zum Aktualisieren des kollaborativ gelernten Modells mit den bekannten Verarbeitungsknoten nur zu verwenden ist, wenn die bestimmte Ähnlichkeit innerhalb eines vorbestimmten Schwellwerts liegt.

10. Verfahren nach Anspruch 9, das ferner Folgendes umfasst:
Zugreifen (5.1) auf eine Datenrepräsentation, die ein oder mehrere Untermodelle, die mit dem gelernten Modell verknüpft sind, mit einem jeweiligen Satz von einem oder mehreren bekannten Verarbeitungsknoten verknüpft, die bereits verwendet werden, um ein spezielles der Untermodelle zu aktualisieren,
in Reaktion auf das Identifizieren (5.2), dass der spezielle erste Verarbeitungsknoten derzeit nicht verwendet wird, um eines der Untermodelle zu aktualisieren, Identifizieren (5.3) eines bekannten Verarbeitungsknotens der Repräsentation, der die ähnlichsten Datensatzeigenschaften mit denen des ersten Verarbeitungsknotens aufweist, und Bestimmen (5.4), dass der erste Verarbeitungsknoten nachfolgend zum Aktualisieren des speziellen Untermodells, das vom ähnlichsten bekannten Verarbeitungsknoten aktualisiert wurde, zu verwenden ist.

11. Computerlesbares Medium (130), das darauf gespeicherte Programmanweisungen umfasst, die, wenn sie von einem Computer ausgeführt werden, den Computer veranlassen, das folgende Verfahren durchzuführen:
Bestimmen von einer oder mehreren Eigenschaften, die mit einem oder mehreren Verarbeitungsknoten verknüpft sind, wobei der eine oder die mehreren Verarbeitungsknoten dazu ausgelegt sind, jeweilige Daten auf Basis eines lokalen Datensatzes von einem oder mehreren speziellen Verarbeitungsknoten zum Aktualisieren eines kollaborativ gelernten Modells zu nutzen, wobei die eine oder die mehreren Eigenschaften, die mit dem einen oder den mehreren speziellen Verarbeitungsknoten verknüpft sind, auf einer oder mehreren Eigenschaften auf deren lokalem Datensatz basieren;
Bestimmen (4.1) einer Ähnlichkeit zwischen Datensatzeigenschaften eines speziellen ersten Verarbeitungsknotens und entsprechenden Datensatzeigenschaften von einem oder mehreren bekannten Verarbeitungsknoten, die bereits verwendet werden, um das kollaborativ gelernte Modell zu aktualisieren; und
Bestimmen (4.2), dass der erste Verarbeitungsknoten zum Aktualisieren des kollaborativ gelernten Modells mit den bekannten Verarbeitungsknoten nur zu verwenden ist, wenn die bestimmte Ähnlichkeit innerhalb eines vorbestimmten Schwellwerts liegt.

## Revendications

1. Appareil, comprenant des moyens pour réaliser ce qui suit :
déterminer une ou plusieurs propriétés associées à un ou plusieurs nœuds de traitement, les un ou plusieurs nœuds de traitement étant configurés pour utiliser des données respectives sur la base d'un jeu de données locales d'un ou plusieurs nœuds de traitement particuliers pour mettre à jour un modèle appris en collaboration, dans lequel les une ou plusieurs propriétés associées aux un ou plusieurs nœuds de traitement particuliers sont basées sur une ou plusieurs propriétés de leurs jeux de données locales ;
déterminer (4.1) une similarité entre les propriétés de jeu de données d'un premier nœud de traitement particulier et les propriétés de jeu de données correspondantes d'un ou plusieurs nœuds de traitement connus déjà utilisés pour mettre à jour le modèle appris en collaboration ; et
déterminer (4.2) que le premier nœud de traitement doit être utilisé pour mettre à jour le modèle appris en collaboration avec les nœuds de traitement connus uniquement si la similarité déterminée est dans un seuil prédéterminé.

2. Appareil selon la revendication 1, dans lequel les moyens sont outre configurés pour :
accéder (5.1) à une représentation de données, associer un ou plusieurs sous-modèles associés au modèle appris à un ensemble respectif d'un ou plusieurs nœuds de traitement connus déjà utilisés pour mettre à jour un sous-modèle particulier desdits sous-modèles,
dans lequel les moyens sont outre configurés pour, en réponse à l'identification (5.2) du fait que le premier nœud de traitement particulier n'est pas actuellement utilisé pour mettre à jour l'un des sous-modèles, identifier (5.3) un nœud de traitement connu de la représentation dont les propriétés de jeu de données sont les plus similaires à celles du premier nœud de traitement, et déterminer (5.4) que le premier nœud de traitement doit être utilisé ultérieurement pour mettre à jour le sous-modèle particulier mis à jour par ledit nœud de traitement connu le plus similaire.

3. Appareil selon la revendication 2, dans lequel le sous-modèle déterminé est mis à jour ultérieurement à l'aide de données parvenant du premier nœud de traitement et de tous les autres nœuds de traitement connus déjà utilisés pour mettre à jour le sous-modèle, et la représentation de données est mise à jour pour inclure le premier nœud de traitement.

4. Appareil selon la revendication 2 ou 3, dans lequel la représentation de données pouvant être mises à jour comprend une représentation hiérarchique des nœuds de traitement connus comportant un nœud racine associé au modèle appris et un ou plusieurs niveaux descendants comportant un ou plusieurs nœuds feuilles associés à un sous-modèle respectif, les un ou plusieurs nœuds feuilles étant liés à un nœud de niveau supérieur aux propriétés de jeu de données les plus similaires, dans lequel l'identification du nœud de traitement connu de la représentation aux propriétés de jeu de données les plus similaires est effectuée uniquement par rapport à un ensemble de nœuds candidats comprenant le nœud racine et les un ou plusieurs nœuds feuilles.

5. Appareil selon l'une des revendications 2 à 4, dans lequel la représentation de données est stockée sur un serveur collaboratif centralisé auquel peuvent accéder les un ou plusieurs nœuds de traitement.

6. Appareil selon l'une des revendications 2 à 4, dans lequel la représentation de données est stockée sur un ou plusieurs des nœuds de traitement, et transmise à d'autres nœuds parmi les un ou plusieurs nœuds de traitement.

7. Appareil selon l'une des revendications 1 à 6, dans lequel la similarité est déterminée sur la base d'une distribution statistique des données dans les jeux de données locales.

8. Appareil selon l'une des revendications 1 à 7, dans lequel les moyens sont outre configurés pour réaliser ladite détermination en réponse à une demande reçue du premier nœud de traitement, la demande comportant les une ou plusieurs propriétés de son jeu de données locales.

9. Procédé mis en œuvre par ordinateur, comprenant les étapes suivantes :
déterminer une ou plusieurs propriétés associées à un ou plusieurs nœuds de traitement, les un ou plusieurs nœuds de traitement étant configurés pour utiliser des données respectives sur la base d'un jeu de données locales d'un ou plusieurs nœuds de traitement particuliers pour mettre à jour un modèle appris en collaboration, dans lequel les une ou plusieurs propriétés associées aux un ou plusieurs nœuds de traitement particuliers sont basées sur une ou plusieurs propriétés de leurs jeux de données locales ;
déterminer (4.1) une similarité entre les propriétés de jeu de données d'un premier nœud de traitement particulier et les propriétés de jeu de données correspondantes d'un ou plusieurs nœuds de traitement connus déjà utilisés pour mettre à jour le modèle appris en collaboration ; et
déterminer (4.2) que le premier nœud de traitement doit être utilisé pour mettre à jour le modèle appris en collaboration avec les nœuds de traitement connus uniquement si la similarité déterminée est dans un seuil prédéterminé.

10. Procédé selon la revendication 9, comprenant en outre les étapes suivantes :
accéder (5.1) à une représentation de données, associer un ou plusieurs sous-modèles associés au modèle appris à un ensemble respectif d'un ou plusieurs nœuds de traitement connus déjà utilisés pour mettre à jour un sous-modèle particulier desdits sous-modèles,
en réponse à l'identification (5.2) du fait que le premier nœud de traitement particulier n'est pas actuellement utilisé pour mettre à jour l'un des sous-modèles, identifier (5.3) un nœud de traitement connu de la représentation dont les propriétés de jeu de données sont les plus similaires à celles du premier nœud de traitement, et déterminer (5.4) que le premier nœud de traitement doit être utilisé ultérieurement pour mettre à jour le sous-modèle particulier mis à jour par ledit nœud de traitement connu le plus similaire.

11. Support lisible par ordinateur (130) comprenant des instructions de programme stockées sur celui-ci qui, lorsqu'elles sont exécutées par un ordinateur, amènent l'ordinateur à réaliser le procédé suivant :
déterminer une ou plusieurs propriétés associées à un ou plusieurs nœuds de traitement, les un ou plusieurs nœuds de traitement étant configurés pour utiliser des données respectives sur la base d'un jeu de données locales d'un ou plusieurs nœuds de traitement particuliers pour mettre à jour un modèle appris en collaboration, dans lequel les une ou plusieurs propriétés associées aux un ou plusieurs nœuds de traitement particuliers sont basées sur une ou plusieurs propriétés de leurs jeux de données locales ;
déterminer (4.1) une similarité entre les propriétés de jeu de données d'un premier nœud de traitement particulier et les propriétés de jeu de données correspondantes d'un ou plusieurs nœuds de traitement connus déjà utilisés pour mettre à jour le modèle appris en collaboration ; et
déterminer (4.2) que le premier nœud de traitement doit être utilisé pour mettre à jour le modèle appris en collaboration avec les nœuds de traitement connus uniquement si la similarité déterminée est dans un seuil prédéterminé.
